# EUROPEAN PATENT APPLICATION

(11) **EP 4 636 932 A2**
(43) Date of publication of application: **22.10.2025**
(21) Application number: 25170913.5
(22) Date of filing: 16.04.2025
(51) Int. Cl.: H01M 50/451, H01M 4/525, H01M 4/131, H01M 10/0525, H01M 50/434, H01M 50/449

(54) **LITHIUM SECONDARY BATTERY**

(30) Priority: 19.04.2024 KR 20240052782
(71) Applicant: SK On Co., Ltd., Seoul 03161 (KR)
(72) Inventor: HWANG, Duck Chul, 34124 Daejeon (KR); KIM, Jong Hwa, 34124 Daejeon (KR); KIM, Whee Sung, 34124 Daejeon (KR)
(74) Representative: Prüfer & Partner mbB Patentanwälte · Rechtsanwälte

(57) **Abstract**

The lithium secondary battery according to the embodiments of the present disclosure may include a cathode which includes a cathode active material layer including a cathode active material including a lithium metal oxide having a secondary particle form in which a plurality of primary particles are aggregated, and doped with a doping element; an anode disposed to face the cathode. In addition, the lithium secondary battery may include a separation membrane interposed between the cathode and the anode, and including a substrate film and a ceramic coating layer formed on at least one surface of the substrate film. The primary particles may have an aspect ratio of 1.4 to 7.0, and a ratio of the thickness of the ceramic coating layer to the total thickness of the separation membrane may be 0.13 to 0.44.

## Description

### [BACKGROUND OF THE INVENTION]

### 1. Field of the Invention

The disclosure of the present application relates to a lithium secondary battery.

### 2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-shaped outer case in which the electrode assembly and the electrolyte are housed.

The secondary battery including an electrolyte may exhibit high capacity and electrical characteristics due to the high reactivity of the electrolyte. However, if the secondary battery including the electrolyte is damaged or penetrated by an external force, a safety problem such as a fire risk may arise due to the high reactivity of the electrolyte.

### [SUMMARY OF THE INVENTION]

An object of the present disclosure is to provide a lithium secondary battery having improved lifespan characteristics, output characteristics and stability.

A lithium secondary battery according to exemplary embodiments of the present disclosure may include: a cathode which comprises a lithium metal oxide having a secondary particle form in which a plurality of primary particles are aggregated, and doped with a doping element; an anode disposed to face the cathode; and a separation membrane interposed between the cathode and the anode, and including a substrate film and a ceramic coating layer formed on at least one surface of the substrate film. The primary particles may have an aspect ratio of 1.4 to 7.0, and a ratio of a thickness of the ceramic coating layer to a total thickness of the separation membrane may be 0.13 to 0.44.

In some embodiments, the aspect ratio may be 2.5 to 5.5.

In some embodiments, the lithium metal oxide may include nickel, and a molar fraction of nickel relative to a total number of moles of all elements excluding lithium and oxygen in the lithium metal oxide may be 0.5 or more and less than 1.

In some embodiments, the molar fraction of nickel relative to the total number of moles of all elements excluding lithium and oxygen in the lithium metal oxide may be 0.6 to 0.94.

In some embodiments, the doping element may include at least one selected from the group consisting of Al, Ti, Zr, Ba, Sr, W, Nb, Y, Mg, V, Ta, Mo, La and B.

In some embodiments, the doping element may include at least one selected from the group consisting of Al, Ti, Zr, W, V, La and B.

In some embodiments, the doping element may include two or more different doping elements.

In some embodiments, a content of the doping element may be 300 ppm to 15,000 ppm based on a total weight of the lithium metal oxide.

In some embodiments, the content of the doping element may be 2,500 ppm to 12,000 ppm based on the total weight of the lithium metal oxide.

In some embodiments, the ratio of the thickness of the ceramic coating layer to the total thickness of the separation membrane may be 0.17 to 0.33.

In some embodiments, the separation membrane may have a total thickness of 9 µm to 18 µm.

In some embodiments, the ceramic coating layer may have a total thickness of 2 µm to 6 µm.

In some embodiments, the ceramic coating layer may include a ceramic material and a binder used in the coating layer of the separation membrane.

In some embodiments, the ceramic material may include at least one selected from the group consisting of alumina, titanium oxide, barium titanate, magnesium oxide, zirconia, zinc oxide, boehmite, aluminum hydroxide, magnesium hydroxide and silica.

The lithium secondary battery according to exemplary embodiments of the present disclosure may exhibit improved lifespan characteristics and capacity characteristics.

The lithium secondary battery according to exemplary embodiments may include lithium metal oxide doped with a doping element as a cathode active material. The doping element may suppress structural deterioration of the cathode active material during charge and discharge cycles. Accordingly, the deterioration of lifespan and capacity characteristics resulting from damage to the cathode active material may be inhibited.

In addition, the separation membrane may include a coating layer, thereby exhibiting improved stability even if it is damaged or penetrated by an external force. For example, even if the separation membrane is penetrated, the occurrence of ignition, etc. may be suppressed by the coating layer.

The lithium secondary battery of the present disclosure may be widely applied in green technology fields, such as electric vehicles, battery charging stations, as well as solar power generation, wind power generation, and the like, which use the batteries. The lithium secondary battery of the present disclosure may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

FIGS. 1 and 2 are a schematic plan view and a cross-sectional view of a lithium secondary battery according to exemplary embodiments, respectively;
FIGS. 3 to 8 are images measured by observing cross-sections of cathode active material particles according to exemplary embodiments, respectively, using the scanning electron microscope (SEM); and
FIG. 9 is a schematic cross-sectional view of a separation membrane according to exemplary embodiments.

### [DETAILED DESCRIPTION OF THE INVENTION]

According to exemplary embodiments of the present disclosure, a lithium secondary battery is provided, which includes: a cathode including a cathode active material layer which includes a lithium metal oxide having a secondary particle form in which a plurality of primary particles are aggregated; an anode disposed to face the cathode; and a separation membrane interposed between the cathode and the anode.

Hereinafter, embodiments of the present disclosure will be described in detail. However, these are merely illustrative and the present disclosure is not limited to the specific embodiments described by way of example.

Unless otherwise defined herein, when a portion such as a layer, film, thin-film, region, or plate, etc. is present "on" or "above" another portion, it may include not only the case where the portion is present "directly on" the another portion, but also the case where a further another portion is present in the middle therebetween.

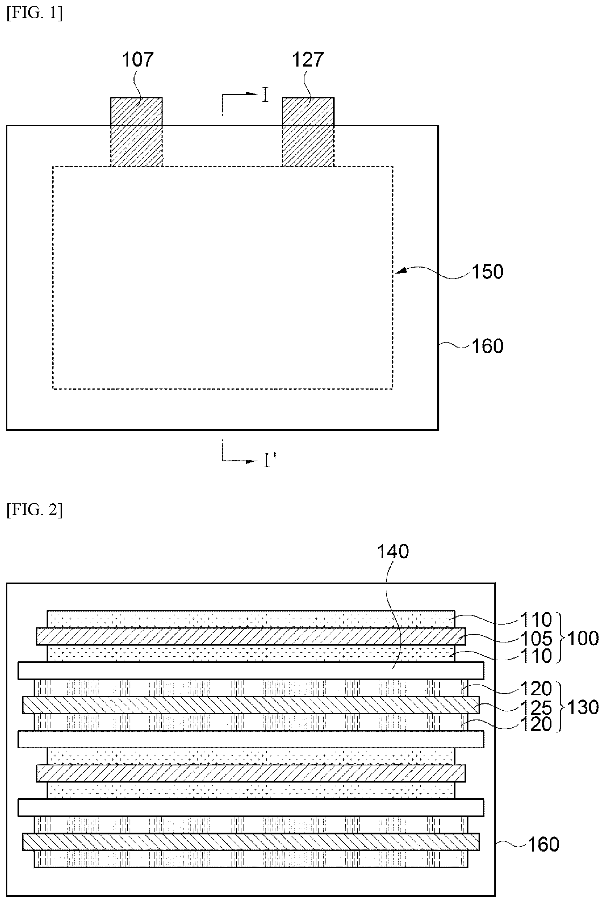

FIGS. 1 and 2 are a schematic plan view and a cross-sectional view illustrating a rechargeable lithium battery according to exemplary embodiments, respectively. For example, FIG. 2 is a cross-sectional view taken on line I-I' in FIG. 1.

Referring to FIGS. 1 and 2, the rechargeable lithium battery may include an electrode assembly including a cathode 100, an anode 130 disposed to face the cathode 100 and a separation membrane 140 interposed between the cathode 100 and the anode 130.

According to exemplary embodiments, the cathode 100 may include a cathode current collector 105 and a cathode active material layer 110 disposed on at least one surface of the cathode current collector 105. The cathode 100 may include a lithium metal oxide having a secondary particle form in which a plurality of primary particles are aggregated, and doped with a doping element.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 to 50 µm.

According to exemplary embodiments, the cathode active material layer 110 may include a cathode active material. The cathode active material may include a compound capable of reversibly intercalating and deintercalating lithium ions.

According to exemplary embodiments, the cathode active material may include a lithium metal oxide having a secondary particle form in which a plurality of primary particles are aggregated.

According to exemplary embodiments, the primary particles may have an aspect ratio of 1.4 to 7.0.

If the aspect ratio of the primary particles is less than 1.4, the primary particles may not be stably aggregated. For example, cracks may occur in the secondary particle during repeated charge and discharge cycles, and the occurrence of gaps or pores inside the secondary particle, in which the primary particles are aggregated, may increase, thereby degrading the structural stability. Accordingly, the lifespan characteristics of the cathode active material may be reduced.

The primary particle may be morphologically distinguished from the secondary particle. For example, the secondary particle may mean a particle in which a plurality of primary particles are aggregated and are substantially regarded or observed as a single particle. For example, in the case of the secondary particles, the boundaries of the primary particles may be observed in a cross-sectional image of the particle obtained using a scanning electron microscope (SEM).

If the aspect ratio of the primary particle exceeds 7.0, the length of a major axis, which serves as the movement path of lithium ions, may become excessively long, thereby degrading the output characteristics.

The term "aspect ratio" as used herein refers to a ratio of the length of the major axis to the length of a minor axis of the primary particle. For example, the aspect ratio is defined as the ratio of the length of the longest straight line to the length of the shortest straight line among the straight lines that intersect the cross-section of the primary particle while passing through the center of the cross-section of the primary particle. For example, the closer the aspect ratio is to 1, the more spherical the particle appears, and the larger the aspect ratio is, the more rod-type the particle appears.

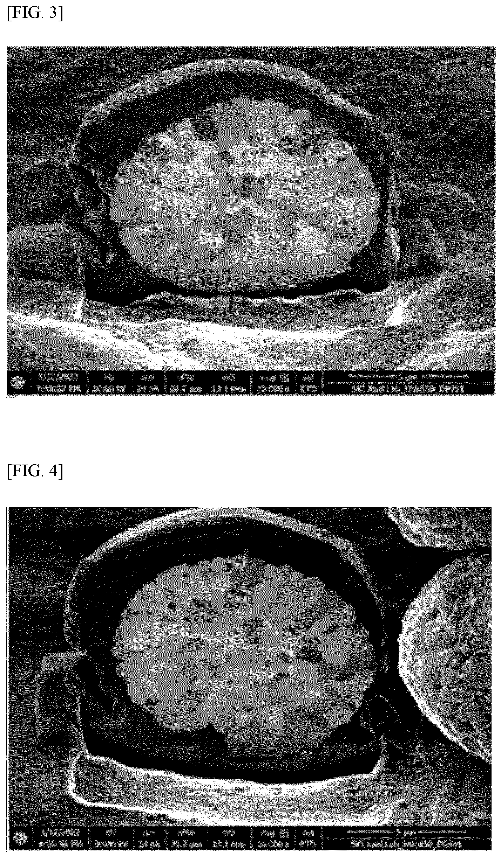

FIGS. 3 to 8 are images measured by observing cross-sections of cathode active material particles according to exemplary embodiments, respectively, using the scanning electron microscope (SEM).

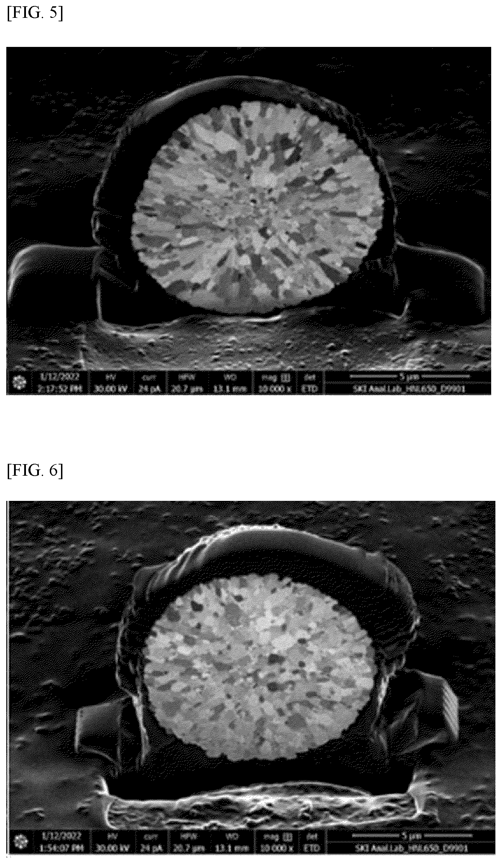

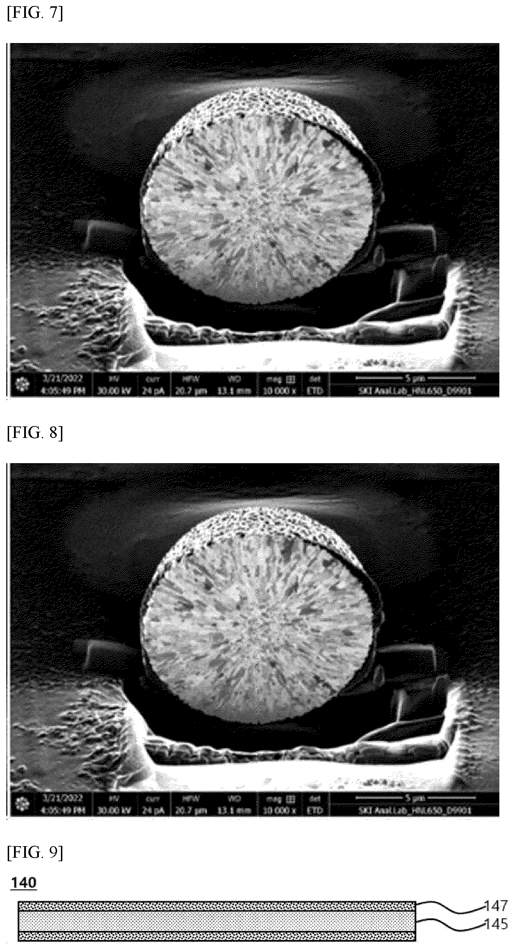

Specifically, FIGS. 3 and 4 show SEM images of cross-sections of arbitrary cathode active material particles among the cathode active material particles within the secondary particle structures, wherein primary particles having an aspect ratio of 1.42 are aggregated, respectively. FIGS. 5 and 6 show SEM images of cross-sections of arbitrary cathode active material particles among the cathode active material particles within the secondary particle structures, wherein primary particles having an aspect ratio of 2.58 are aggregated, respectively. FIGS. 7 and 8 show SEM images of cross-sections of arbitrary cathode active material particles among the cathode active material particles within the secondary particle structures, wherein primary particles having an aspect ratio of 6.51 are aggregated, respectively.

Referring to FIGS. 3 to 8, it can be seen that when the primary particles have an aspect ratio of 1.42 to 6.51, the primary particles are stably aggregated, thereby forming secondary particles.

For example, the primary particles may have an aspect ratio of 1.42 to 7.0, or 1.5 to 7.0. Within the above range, the primary particles may be aggregated to stably form secondary particles. Accordingly, the collapse of the secondary particle structures may be suppressed during repeated charging and discharging the secondary including the cathode active material, thereby improving the lifespan characteristics and output characteristics simultaneously.

In some embodiments, the primary particles may have an aspect ratio of 1.53 to 6.51, 2.0 to 6.51, 2.5 to 6.51, 2.5 to 6.0, 2.5 to 5.5, 2.58 to 5.5, or 2.58 to 5.02. Within the above range, the lifespan characteristics and output characteristics may be further improved.

In exemplary embodiments, the cathode active material may include a lithium metal oxide. For example, the primary particles may be composed entirely of lithium metal oxide, and the secondary particles formed by agglomeration of the primary particles may also be composed entirely of lithium metal oxide.

In some embodiments, the lithium metal oxide may have a mean particle diameter (D₅₀) of 3 µm to 25 µm, 5 µm to 25 µm, or 5 µm to 20 µm. Within the above range, intercalation and deintercalation of lithium ions may be more efficiently facilitated.

The term "mean particle diameter (D₅₀)" used in the present disclosure may refer to a particle diameter corresponding to a cumulative volume fraction of 50% in the volume-based particle size distribution of the lithium metal oxide.

In some embodiments, the cathode active material or the lithium metal oxide may include nickel. For example, the cathode active material or the lithium metal oxide may have a layered structure or a crystal structure represented by Formula 1 below.

[Formula 1] LiₓNiₐM_{b}O_{2+z}

In Formula 1, x, a, b and z may satisfy 0.8≤x≤1.2, 0.5≤a≤1, 0<b≤0.5, -0.2≤z≤0.2, a+b=1. M may include Co, Mn, and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium metal oxide may include a layered structure or crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the auxiliary elements described above. In Formula 1-1, x, a, b1, b2 and z may satisfy 0.8≤x≤1.2, 0.5≤a≤1, 0≤b1+b2≤0.5, -0.2≤z≤0.2, a+b1+b2=1.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increase, long-term storage stability and lifespan stability of the cathode or the secondary battery may be relatively decreased, and side reactions with the electrolyte may also be increased. However, according to exemplary embodiments, by including Co, the lifespan stability and capacity retention characteristics may be improved through Mn while maintaining electrical conductivity.

In some embodiments, a molar fraction of nickel relative to a total number of moles of all elements excluding lithium and oxygen in the lithium metal oxide (for example, the molar fraction of nickel relative to the total number of moles of nickel, cobalt and manganese) may be 0.5 or more and less than 1, 0.5 to 0.99, 0.6 to 0.99, or 0.6 to 0.98. Within the above range, the output characteristics and the lifespan characteristics of the cathode active material may be improved simultaneously. For example, while the capacity characteristics are improved by the nickel element, the structural stability may be enhanced by the remaining elements excluding nickel. For example, an increase in the nickel content may enhance the capacity characteristics, thereby reducing the amount of lithium metal oxide used. Accordingly, the thickness of the electrode (for example, the cathode) may be reduced, leading to an improvement in the output characteristics.

In one embodiment, the molar fraction of nickel relative to the total number of moles of all elements excluding lithium and oxygen in the lithium metal oxide (for example, the molar fraction of nickel relative to the total number of moles of nickel, cobalt and manganese) may be 0.6 to 0.95, 0.6 to 0.94, 0.6 to 0.92, 0.7 to 0.92, 0.7 to 0.9, or 0.75 to 0.9. Within the above range, the output characteristics and lifespan characteristics of the cathode active material may be further improved.

In exemplary embodiments, the cathode active material (e.g., the lithium metal oxide) may further include a coating element or a doping element. In one embodiment, the coating element or the doping element may diffuse into the primary particles and be positioned inside the primary particles. In one embodiment, the coating element or the doping element may be formed on the surface of the primary particles (e.g., between the primary particles). In one embodiment, the coating element or the doping element may be positioned on the surface of the secondary particles in which the primary particles are aggregated.

In some embodiments, the doping element or the coating element may include at least one selected from the group consisting of Al, Ti, Zr, Ba, Sr, W, Nb, Y, Mg, V, Ta, Mo, La and B. Accordingly, the structural stability of the primary particles or the secondary particles, in which the primary particles are aggregated, may be improved due to the doping element, thereby enhancing the lifespan characteristics. In addition, the electrical conductivity of the cathode active material may be improved, thereby enhancing the output characteristics.

In one embodiment, the doping element or the coating element may include at least one selected from the group consisting of Al, Ti, Zr, W, V, La and B. Accordingly, the lifespan characteristics and output characteristics of the cathode active material may be further improved.

In some embodiments, the doping element or the coating element may be used in a combination of two or more different doping elements or coating elements. For example, a combination of Al and Y, Zr and Mo, Sr and W, Nb and Ti, Mg and B, Ta and Ba, or La and V may be used as the doping element or coating element. Accordingly, the lifespan characteristics and output characteristics of the cathode active material may be further improved.

In one embodiment, the doping element or the coating element may be used in a combination of three elements. For example, a combination of Ti, Sr and Y, or Al, Zr and W may be used. Accordingly, the lifespan characteristics and output characteristics of the cathode active material may be further improved.

In some embodiments, a content of the doping element or the coating element may be 300 ppm to 15,000 ppm, 1,000 ppm to 14,000 ppm, or 2,000 ppm to 14,000 ppm based on a total weight of the cathode active material (e.g., the lithium metal oxide). Within the above content range, the doping elements or the coating elements may be positioned while maintaining an appropriate interval therebetween. Accordingly, the electrical conductivity of the cathode active material may be improved while suppressing side reactions by the doping element or the coating element. As a result, the lifespan characteristics and the output characteristics may be improved.

In one embodiment, the content of the doping element or the coating element may be 2,500 ppm to 12,000 ppm, 2,500 ppm to 10,000 ppm, 2,500 ppm to 8,000 ppm, 2,500 ppm to 6,000 ppm, 2,500 ppm to 4,500 ppm, or 3,500 ppm to 4,500 ppm based on the total weight of the cathode active material (e.g., lithium metal oxide). Within the above content range, the output characteristics and the lifespan characteristics of the cathode active material may be further improved.

In some embodiments, the cathode active material may further include a lithium cobalt oxide-based active material, a lithium manganese oxide-based active material, a lithium nickel oxide-based active material, or a lithium metal phosphate-based active material (e.g., LiFePO₄), in addition to the lithium metal oxide.

In some embodiments, the cathode active material may further include a manganese (Mn)-rich active material, a lithium (Li) rich layered oxide (LLO)/over lithiated oxide (OLO)-based active material, or a cobalt (Co)-less active material, having a chemical structure or crystal structure represented by Formula 2 below, in addition to the lithium metal oxide.

[Formula 2] p[Li₂MnO₃]·(1-p)[Li_{q}JO₂]

In Formula 2, p and q may satisfy 0<p<1, 0.9≤q≤1.2, and J may include at least one element of Mn, Ni, Co, Fe, Cr, V, Cu, Zn Ti, Al, Mg and B.

For example, a cathode slurry may be prepared by mixing the above-described cathode active material in a solvent. The cathode slurry may be applied to the cathode current collector 105, followed by drying and pressing the same to prepare the cathode active material layer 110. The coating process may be performed using methods such as gravure coating, slot die coating, simultaneous multilayer die coating, imprinting, doctor blade coating, dip coating, bar coating or casting, but it is not limited thereto. The cathode active material layer 110 may include a binder, and optionally may further include a conductive material, a thickener, etc.

Non-limiting examples of the solvent used in the preparation of the cathode active material layer 110 may include N-methyl-2-pyrrolidone (NMP), dimethylformamide, dimethylacetamide, N,N-dimethylaminopropylamine, ethylene oxide, tetrahydrofuran, and the like, but they are not limited thereto.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as LaSrCoO₃, and LaSrMnO₃, but it is not limited thereto

The cathode active material layer 110 may further include a thickener and/or a dispersant. For example, the cathode active material layer 110 may include a thickener such as carboxy methyl cellulose (CMC).

The anode 130 may include an anode current collector 125 and an anode active material layer 120 disposed on at least one surface of the anode current collector 125.

Non-limiting examples of the anode current collector 125 may include a copper foil, a nickel foil, a stainless steel foil, a titanium foil, a nickel foam, a copper foam, a polymer substrate coated with conductive metal and the like. These may be used alone or in combination of two or more thereof. For example, the anode current collector 125 may have a thickness of 10 µm to 50 µm.

The anode active material layer 120 may include an anode active material. A material capable of adsorbing and desorbing lithium ions may be used as the anode active material. For example, the anode active material may include crystalline carbon-based materials such as crystalline carbon, amorphous carbon, a carbon composite, or carbon fibers, etc.; lithium metal; a lithium alloy; a silicon (Si)-containing material or a tin (Sn)-containing material, etc.

The amorphous carbon may include, for example, mesocarbon microbeads (MCMB), mesophase pitch-based carbon fibers (MPCF), etc.

Examples of the crystalline carbon may include graphite-based carbons such as natural graphite, artificial graphite, graphite cokes, graphite MCMB, and graphite MPCF.

The lithium metal may include pure lithium metal or lithium metal having a protective layer formed thereon for suppressing dendrite growth, etc. In one embodiment, a lithium metal-containing layer deposited or coated on the anode current collector 125 may be used as the anode active material layer 120. In one embodiment, a lithium thin-film layer may be used as the anode active material layer 120.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, SiOₓ (0<x<2), metal-doped SiOₓ (0<x<2), a silicon-carbon composite, etc. The metal may include lithium and/or magnesium, and the metal-doped SiOₓ (0<x<2) may include a metal silicate.

For example, the anode active material may be mixed in a solvent to prepare an anode slurry. The anode slurry may be applied /deposited to the anode current collector 125, followed by drying and pressing the same to prepare the anode active material layer 120. The coating process may be performed using methods such as gravure coating, slot die coating, simultaneous multilayer die coating, imprinting, doctor blade coating, dip coating, bar coating, casting, etc., but it is not limited thereto. The anode active material layer 120 may further include a binder, and optionally may further include a conductive material, a thickener, etc.

The solvent for the anode active material layer 120 may include, for example, water, pure water, deionized water, distilled water, ethanol, isopropanol, methanol, acetone, n-propanol, t-butanol, etc.

The above-described materials that can be used when manufacturing the cathode as the binder, conductive agent, and thickener may be used.

In some embodiments, the anode binder may include, for example, a styrene-butadiene rubber (SBR)-based binder, carboxymethyl cellulose (CMC), a polyacrylic acid-based binder, a poly(3,4-ethylenedioxythiophene) (PEDOT)-based binder, etc.

According to exemplary embodiments, the separation membrane 140 may be interposed between the cathode 100 and the anode 130. The separation membrane 140 may be configured to prevent an electrical short-circuit between the cathode and the anode, and to allow a flow of ions to occur.

FIG. 9 is a schematic cross-sectional view illustrating the separation membrane according to exemplary embodiments.

Referring to FIG. 9, the separation membrane 140 may include a substrate film 145 and a ceramic coating layer 147 formed on at least one surface of the substrate film 145.

In some embodiments, the ceramic coating layer 147 may be disposed on at least one of surfaces of the separation membrane 140, which are in contact with the cathode 100 and the anode 130. For example, the ceramic coating layer 147 disposed on the substrate film 145 may be in contact with at least one of one surface of the cathode 100 and one surface of the anode 130.

For example, the ceramic coating layer 147 disposed on the substrate film 145 may be in contact with one surface of the cathode 100. For example, the ceramic coating layer 147 disposed on the substrate film 145 may be in contact with one surface of the anode 130. For example, the ceramic coating layers 147 disposed on both surfaces of the substrate film 145 may be in contact with one surface of the cathode 100 and one surface of the anode 130, respectively.

According to exemplary embodiments, a ratio of the thickness of the ceramic coating layer 147 to the total thickness of the separation membrane 140 may be 0.13 to 0.44.

If the ratio of the thickness of the ceramic coating layer 147 to the thickness of the separation membrane 140 is less than 0.13, the ceramic coating layer 147 may not stably protect the substrate film 145. Therefore, if the separation membrane 140 is damaged or penetrated due to an external force, the material contained in the cathode 100 and the material contained in the anode 130 may move through the damaged or penetrated separation membrane 140, potentially causing a fire, etc., thereby degrading stability.

If the ratio of the thickness of the ceramic coating layer 147 to the total thickness of the separation membrane 140 exceeds 0.44, stable ion transport may be hindered due to the thick ceramic coating layer 147, thereby degrading the output characteristics.

When the ratio of the thickness of the ceramic coating layer 147 to the total thickness of the separation membrane 140 is maintained in a range of 0.13 to 0.44, the capacity characteristics and output characteristics may be improved, as well as the safety may be simultaneously enhanced.

In some embodiments, the ratio of the thickness of the ceramic coating layer 147 to the total thickness of the separation membrane 140 may be 0.13 to 0.42, 0.13 to 0.40, 0.17 to 0.40, or 0.17 to 0.33. Within the above range, the capacity characteristics and output characteristics may be further improved, while enhancing the penetration stability.

In one embodiment, the ratio of the thickness of the ceramic coating layer 147 to the total thickness of the separation membrane 140 may be 0.20 to 0.33, 0.22 to 0.33, or 0.25 to 0.33. Within the above range, the capacity characteristics and output characteristics may be further improved.

In some embodiments, the separation membrane 140 may have a total thickness of 9 µm to 18 µm, 9 µm to 15 µm, 10 µm to 15 µm, or 12 µm to 15 µm. Within the above range, the materials between the cathode 100 and the anode 130 may be stably isolated from each other, thereby enabling stable ion flow.

In some embodiments, the substrate film 145 may have a thickness of 3 µm to 16 µm, 4 µm to 13 µm, 6 µm to 13 µm, or 8 µm to 12 µm. Within the above range, stable ion transport through the separation membrane 140 may be secured.

In some embodiments, the ceramic coating layer 147 may have a thickness of 2 µm to 6 µm, 2 µm to 5 µm, 2 µm to 4 µm, or 3 µm to 4 µm. Within the above range, even if the separation membrane 140 is damaged due to an external force, the substrate film 145 may be protected. Accordingly, the stability of the separation membrane 140 may be improved.

The thickness of the ceramic coating layer 147 may represent the total thickness of the ceramic coating layer 147. For example, when the ceramic coating layer 147 is formed on only one surface of the substrate film 145, the thickness of the ceramic coating layer 147 may represent the thickness of one ceramic coating layer 147. For example, when the ceramic coating layers 147 are formed on both surfaces of the substrate film 145, the thickness of the ceramic coating layer 147 may represent a sum of the thicknesses of the ceramic coating layers 147 formed on both surfaces.

In some embodiments, the separation membrane 140 may include a ceramic material and a binder used in the coating layer of the separation membrane. For example, the ceramic coating layer 147 may be disposed on the substrate film 145, with the ceramic material being fixed by the binder used in the coating layer of the separation membrane.

The term "ceramic material" as used herein may refer to a material including ceramic. For example, it may include both cases where ceramic is used alone and cases where ceramic is used in combination with other elements or compounds.

In some embodiments, the binder used in the coating layer of the separation membrane may include a PVDF-based binder such as polyvinylidene fluoride (PVDF), poly(vinylidene fluoride-co-hexafluoropropylene), poly(vinylidene fluoride-co-trichloroethylene), etc., and an acrylate-based binder such as polymethylmethacrylate.

For example, the binder used in the coating layer of the separation membrane may also include at least one selected from the group consisting of polyacrylate, polybenzoate, polyvinyl pyrrolidone, polystyrene, polymethyl methacrylate, polybutylacrylate, polyvinylidene fluoride, and copolymers thereof.

For example, the binder used in the coating layer of the separation membrane may also include a rubber binder such as acrylonitrile butadiene rubber (NBR), poly(butadiene) rubber (BR), and styrene-butadiene rubber (SBR), polyacrylonitrile, polyvinylpyrrolidone, polyvinyl acetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, polyvinylalcohol, etc. These may be used alone or in combination of two or more thereof.

In some embodiments, the ceramic material may include alumina (Al₂O₃), titanium oxide (TiO), barium titanate (BaTiO₃), magnesium oxide (MgO), zirconia (ZrO₂), zinc oxide (ZnO), boehmite (AlO(OH)), aluminum hydroxide (Al(OH)₃), magnesium hydroxide (Mg(OH)₂), silica (SiO₂), titanium dioxide (TiO₂), calcium oxide (CaO), yttrium oxide (Y₂O₃), nickel oxide (NiO), silicon carbide (SiC), lead titanate (PbTiO₃), lead zirconate titanate (PZT), lead magnesium niobate-lead titanate (PMN-PT), hafnium oxide (HfO₂), strontium titanate (SrTiO₃), tin dioxide (SnO₂), cerium oxide (CeO₂), etc. These may be used alone or in combination of two or more thereof.

In one embodiment, the ceramic material may include at least one selected from the group consisting of alumina (Al₂O₃), titanium oxide (TiO), barium titanate (BaTiO₃), magnesium oxide (MgO), zirconia (ZrO₂), zinc oxide (ZnO), boehmite (AlO(OH)), aluminum hydroxide (Al(OH)₃), magnesium hydroxide (Mg(OH)₂) and silica (SiO₂). Accordingly, the ignition stability through the ceramic coating layer 147 may be further improved.

In some embodiments, a content of the ceramic material may be 80% by weight ("wt%") to 99 wt%, 85 wt% to 99 wt%, 90 wt% to 99 wt%, 92 wt% to 98 wt%, or 94 wt% to 98 wt%, based on the total weight of the ceramic coating layer 147. Within the above range, the stability of the separation membrane 140 may be improved by the ceramic material.

In some embodiments, the content of the binder used in the coating layer of the separation membrane may be 1 wt% to 20 wt%, 1 wt% to 15 wt%, 1 wt% to 10 wt%, 2 wt% to 8 wt%, or 2 wt% to 6 wt%, based on the total weight of the ceramic coating layer 147. Within the above range, the ceramic coating layer 147 may be stably fixed to the substrate film 145 through the binder used in the coating layer of the separation membrane.

In some embodiments, the substrate film 145 may include a porous polymer film or a porous nonwoven fabric. The porous polymer film may include a polyolefin polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, etc. The substrate film 145 may have a single-layer or multi-layer structure including the above-described polymer film and/or nonwoven fabric.

For example, a mixed solution obtained by mixing a ceramic material and a binder used in the coating layer of the separation membrane in a coating solvent may be applied to the substrate film 145 to prepare the separation membrane 140 having the ceramic coating layer 147 disposed on at least one surface of the substrate film 145.

The solvent may include, for example, tetrachloroethane, methylene chloride, chloroform, 1,1,2-trichloroethane, tetrahydrofuran, 1,4-dioxane, chlorobenzene, cyclohexanone, dimethylformamide, acetone, dimethylacetamide, dimethylsulfoxide, N-methyl-2-pyrrolidone, etc. These may be used alone or in combination of two or more thereof.

Coating for forming the ceramic coating layer 147 may be performed using, for example, a bar coating method, a rod coating method, a wire coating method, a comma coating method, a micro gravure/gravure coating method, a dip coating method, a spray coating method, a spin coating method, etc.

According to exemplary embodiments, the cathode 100, the anode 130 and the separation membrane 140 may be repeatedly disposed to form an electrode assembly 150. In some embodiments, the electrode assembly 150 may be of a winding type, a stacking type, a z-folding type, or a stack-folding type electrode assembly.

The electrode assembly 150 may be housed in a case 160 together with an electrolyte to define a lithium secondary battery. According to exemplary embodiments, a non-aqueous electrolyte may be used as the electrolyte.

The non-aqueous electrolyte includes a lithium salt as the electrolyte and an organic solvent, wherein the lithium salt is represented by, for example, Li⁺X⁻, and examples of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, etc. These may be used alone or in combination of two or more thereof.

The organic solvent may include an organic compound which has sufficient solubility for the lithium salt and the additive, and is electrochemically stable without exhibiting reactivity in the secondary battery. For example, the organic solvent may include at least one of a carbonate solvent, an ester solvent, an ether organic solvent, a ketone solvent, an alcohol solvent and an aprotic solvent.

The carbonate solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, and vinylene carbonate, etc.

The ester solvent may include, for example, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), γ-butyrolactone (GBL), decanolide, valerolactone, mevalonolactone and caprolactone, etc.

The ether organic solvent may include, for example, dibutyl ether, tetraethylene glycol dimethyl ether (TEGDME), diethylene glycol dimethyl ether (DEGDME), dimethoxy ethane, diethoxy ethane, tetrahydrofuran (THF) and 2-methyltetrahydrofuran, etc.

The ketone solvent may include, for example, cyclohexanone.

The alcohol solvent may include, for example, ethyl alcohol, or isopropyl alcohol, etc.

The aprotic solvent may include, for example, dimethyl sulfoxide, acetonitrile, sulfolane and propylene sulfite, etc.

In some embodiments, the electrolyte may further include an additive. The additive may include, for example, a cyclic carbonate compound, a fluorine-substituted carbonate compound, a sultone compound, a cyclic sulfate compound, a cyclic sulfite compound, a phosphate compound and a borate compound. These may be used alone or in combination of two or more thereof.

The cyclic carbonate compound may include, for example, vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

For example, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

For example, a pouch-type case, a prismatic case, a cylindrical case, or a coin-type case, etc. may be used as the case 160.

### Examples and Comparative Examples

### Comparative Example 1

### (1) Preparation of cathode

Secondary particles (hereinafter, CAM-1) were prepared, in which primary particles having an aspect ratio of 2.58, not doped with a doping element, and having a composition of LiNi_{0.3}Co_{0.2}Mn_{0.3}O₂ were aggregated.

The aspect ratio was calculated as a ratio of the longest diameter length to the shortest diameter length among the diameter lengths in the cross-section of the primary particle measured by observing the cross-section of the primary particle using a scanning electron microscope (SEM).

The CAM-1 as an active material, Denka Black as a conductive material, and polyvinylidene fluoride (PVDF) as a binder were mixed in a weight ratio of 92:5:3 to prepare a slurry. The slurry was uniformly applied to an aluminum foil having a thickness of 15 µm, dried at 130 °C, and then pressed to prepare a cathode for a lithium secondary battery.

### (2) Preparation of anode

An anode slurry was prepared, including 90 wt% of artificial graphite as an anode active material, 4 wt% of KS6 as a flake-type conductive material as a conductive material, 3 wt% of styrene-butadiene rubber (SBR) as a binder, and 3 wt% of carboxymethyl cellulose (CMC) as a thickener. The anode slurry was uniformly applied to a copper foil having a thickness of 15 µm, dried, and then pressed to prepare an anode.

### (3) Preparation of separation membrane

96 wt% of boehmite (AlO(OH)) as a ceramic material and 4 wt% of polyacrylate as a binder used in the coating layer of the separation membrane were mixed, and then the mixture was applied to both surfaces of a polyethylene substrate film having a thickness of 9 µm, so that ceramic coating layers having a thickness of 1.5 µm were formed thereon, respectively, thereby preparing a separation membrane having ceramic coating layers formed on both surfaces of the substrate film.

### (4) Manufacturing of lithium secondary battery

The cathode and the anode prepared as described above were respectively cut into a predetermined size and stacked, then an electrode cell was fabricated by interposing the separation membrane prepared as described above between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tabs was included in the sealing part. After injecting the electrolytes through the remaining side except for the sealing part, and the remaining side was also sealed, followed by impregnation for 12 hours or more to manufacture a lithium secondary battery.

A solution, prepared by dissolving 1M LiPF₆ in a mixed solvent of EC/EMC/DEC (25/45/30; volume ratio) and further adding 3 wt% of fluoroethylene carbonate (FEC), 1 wt% of 1,3-propenesultone (PRS) and 0.5 wt% of lithium bis(oxalato)borate (LiBOB) thereto, was used as the electrolyte.

Then, pre-charging was performed on the lithium secondary battery for 36 minutes at a current (2.5 A) corresponding to 0.25 C. After 1 hour, degassing was performed, followed by aging for 24 hours or more. Thereafter, formation charging and discharging was performed (charging conditions: CC-CV 0.2C 4.2V 0.05C CUT-OFF, discharging conditions: CC 0.2C 2.5V CUT-OFF). Subsequently, standard charging and discharging was performed (charging conditions: CC-CV 0.5C 4.2V 0.05C CUT-OFF, discharging conditions: CC 0.5C 2.5V CUT-OFF).

### Examples 1 to 7 and Comparative Examples 2 to 7

Lithium secondary batteries were manufactured in the same manner as in Comparative Example 1, except that the composition of the cathode active material, and the type and content of the doping element were modified as shown in Table 1 below.

### Experimental Example

### (1) Evaluation of room-temperature (25 °C) lifespan characteristics

After 500 cycles repeated charging (CC-CV 0.5C 4.2V 0.05C CUT-OFF) and discharging (CC 0.5C 2.75V CUT-OFF) were performed on the lithium secondary batteries prepared according to the above-described examples and comparative examples, the room-temperature lifespan characteristic (%) was determined by calculating the discharge capacity at 500th cycle as a percentage (%) of the discharge capacity at the 1st cycle. Room-temperature lifespan characteristic (%) = (Discharge capacity at 500th cycle/Discharge capacity at 1st cycle) × 100

### (2) Evaluation of output characteristics

The discharge output characteristics of the lithium secondary batteries manufactured according to the examples and comparative examples were measured using the hybrid pulse power characterization (HPPC) method in accordance with the FreedomCar Battery Test Manual.

### (3) Penetration characteristics

After charging (conditions: 1C 4.2V 0.1C CUT-OFF) the lithium secondary batteries manufactured according to the examples and comparative examples, the presence or absence of ignition was evaluated by penetrating the batteries with a nail having a diameter of 3 mm at a speed of 80 mm/s.

### <Evaluation criteria>

Ignition: A case where the secondary battery ignites after penetration
Non-ignition: A case where the secondary battery is penetrated but does not ignite

The evaluation results are shown in Table 2 below.

**[TABLE 1]**

| | Abbrevia tion for cathode active material | Ni/Co/M n (mol ratio) | Doping element | Dopin g amou nt (ppm) | Aspec t ratio | Separation membrane | | | |
|---|---|---|---|---|---|---|---|---|---|
| | | | | | | Thickn ess of cathod e facing cerami c coating layer (µm) | Substra te film thickne ss (µm) | Thickn ess of anode facing cerami c coating lay er (µm) | Cerami c coating layer thickne ss/Sepa ration membr ane thickne ss (%) |
| Example 1 | CAM-8 | 50/20/30 | Al | 2,500 | 2.58 | 1.5 | 9 | 1.5 | 25 |
| Example 2 | CAM-9 | 60/20/20 | Al | 2,500 | 2.58 | 1.5 | 9 | 1.5 | 25 |
| Example 3 | CAM-10 | 70/15/15 | Al | 2,500 | 2.58 | 1.5 | 9 | 1.5 | 25 |
| Example 4 | CAM-11 | 80/10/10 | Al | 2,500 | 2.58 | 1.5 | 9 | 1.5 | 25 |
| Example 5 | CAM-12 | 90/5/5 | Al | 2,500 | 2.58 | 1.5 | 9 | 1.5 | 25 |
| Example 6 | CAM-13 | 94/3/3 | Al | 2,500 | 2.58 | 1.5 | 9 | 1.5 | 25 |
| Example 7 | CAM-14 | 98/1/1 | Al | 2,500 | 2.58 | 1.5 | 9 | 1.5 | 25 |
| Comparat ive Example 1 | CAM-1 | 50/20/30 | - | - | 2.58 | 1.5 | 9 | 1.5 | 25 |
| Comparat ive Example 2 | CAM-2 | 60/20/20 | - | - | 2.58 | 1.5 | 9 | 1.5 | 25 |
| Comparat ive Example 3 | CAM-3 | 70/15/15 | - | - | 2.58 | 1.5 | 9 | 1.5 | 25 |
| Comparat ive Example 4 | CAM-4 | 80/10/10 | - | - | 2.58 | 1.5 | 9 | 1.5 | 25 |
| Comparat ive Example 5 | CAM-5 | 90/5/5 | - | - | 2.58 | 1.5 | 9 | 1.5 | 25 |
| Comparat ive Example 6 | CAM-6 | 94/3/3 | - | - | 2.58 | 1.5 | 9 | 1.5 | 25 |
| Comparat ive Example 7 | CAM-7 | 98/1/1 | - | - | 2.58 | 1.5 | 9 | 1.5 | 25 |

**[TABLE 2]**

| | Room-temperature lifespan characteristics (%) | Output characteristics (W/kg) | Penetration characteristics |
|---|---|---|---|
| Example 1 | 98.1 | 2,773 | No ignition |
| Example 2 | 97.9 | 2,871 | No ignition |
| Example 3 | 97.6 | 2,880 | No ignition |
| Example 4 | 97.4 | 2,888 | No ignition |
| Example 5 | 94.9 | 2,894 | No ignition |
| Example 6 | 93.9 | 2,978 | No ignition |
| Example 7 | 92.4 | 2,992 | No ignition |
| Comparative Example 1 | 92.6 | 2,354 | No ignition |
| Comparative Example 2 | 92.3 | 2,366 | No ignition |
| Comparative Example 3 | 92.1 | 2,379 | Ignition |
| Comparative Example 4 | 91.8 | 2,403 | Ignition |
| Comparative Example 5 | 91.3 | 2,452 | Ignition |
| Comparative Example 6 | 83.3 | 2,526 | Ignition |
| Comparative Example 7 | 78.3 | 2,531 | Ignition |

Referring to Tables 1 and 2, in Examples 1 to 7, which included a doping element, the room-temperature lifespan characteristics were 92.4% or more, the output characteristics were 2,773 W/kg or more, and no ignition occurred even when the secondary battery was penetrated by a nail.

In Examples 2 to 6, in which the nickel molar fraction was 0.6 to 0.94, output characteristics were relatively improved compared to Example 1.

In Comparative Examples 1 to 7, which did not include the doping element, the room-temperature lifespan characteristics and output characteristics were deteriorated compared to the examples in which other conditions were maintained the same.

In Comparative Examples 3 to 7, in which the nickel molar fraction was 0.7 or more, ignition occurred after the secondary battery was penetrated by the nail.

### Examples 8 to 41 and Comparative Examples 8 to 11

Lithium secondary batteries were manufactured in the same manner as in Comparative Example 1, except that the composition of the cathode active material, the type and content of the doping element, and the aspect ratio were modified as shown in Table 3 below.

The evaluation results are shown in Table 4 below.

**[TABLE 3]**

| | Abbrevia tion for cathode active material | Ni/Co/M n (mol ratio) | Doping element | Dopin g amou nt (ppm) | Aspec t ratio | Separation membrane | | | |
|---|---|---|---|---|---|---|---|---|---|
| | | | | | | Thickn ess of cathod e facing cerami c coating layer (µm) | Substra te film thickne ss (µm) | Thickn ess of anode facing cerami c coating layer (µm) | Cerami c coating layer thickne ss/Sepa ration membr ane thickne ss (%) |
| Example 8 | CAM-19 | 90/5/5 | Al | 100 | 1.42 | 1.5 | 9 | 1.5 | 25 |
| Example 9 | CAM-20 | 90/5/5 | Al | 100 | 1.53 | 1.5 | 9 | 1.5 | 25 |
| Example 10 | CAM-21 | 90/5/5 | Al | 100 | 2.58 | 1.5 | 9 | 1.5 | 25 |
| Example 11 | CAM-22 | 90/5/5 | Al | 100 | 5.02 | 1.5 | 9 | 1.5 | 25 |
| Example 12 | CAM-23 | 90/5/5 | Al | 100 | 6.51 | 1.5 | 9 | 1.5 | 25 |
| Example 13 | CAM-24 | 90/5/5 | Al | 300 | 1.42 | 1.5 | 9 | 1.5 | 25 |
| Example 14 | CAM-25 | 90/5/5 | Al | 300 | 1.53 | 1.5 | 9 | 1.5 | 25 |
| Example 15 | CAM-26 | 90/5/5 | Al | 300 | 2.58 | 1.5 | 9 | 1.5 | 25 |
| Example 16 | CAM-27 | 90/5/5 | Al | 300 | 5.02 | 1.5 | 9 | 1.5 | 25 |
| Example 17 | CAM-28 | 90/5/5 | Al | 300 | 6.51 | 1.5 | 9 | 1.5 | 25 |
| Example 18 | CAM-29 | 90/5/5 | Al | 2,000 | 1.42 | 1.5 | 9 | 1.5 | 25 |
| Example 19 | CAM-30 | 90/5/5 | Al | 2,000 | 1.53 | 1.5 | 9 | 1.5 | 25 |
| Example 20 | CAM-31 | 90/5/5 | Al | 2,000 | 2.58 | 1.5 | 9 | 1.5 | 25 |
| Example 21 | CAM-32 | 90/5/5 | Al | 2,000 | 5.02 | 1.5 | 9 | 1.5 | 25 |
| Example 22 | CAM-33 | 90/5/5 | Al | 2,000 | 6.51 | 1.5 | 9 | 1.5 | 25 |
| Example 23 | CAM-34 | 90/5/5 | Al | 2,500 | 1.42 | 1.5 | 9 | 1.5 | 25 |
| Example 24 | CAM-35 | 90/5/5 | Al | 2,500 | 1.53 | 1.5 | 9 | 1.5 | 25 |
| Example 25 | CAM-36 | 90/5/5 | Al | 2,500 | 5.02 | 1.5 | 9 | 1.5 | 25 |
| Example 26 | CAM-37 | 90/5/5 | Al | 2,500 | 6.51 | 1.5 | 9 | 1.5 | 25 |
| Example 27 | CAM-38 | 90/5/5 | Al | 4,000 | 1.42 | 1.5 | 9 | 1.5 | 25 |
| Example 28 | CAM-39 | 90/5/5 | Al | 4,000 | 1.53 | 1.5 | 9 | 1.5 | 25 |
| Example 29 | CAM-40 | 90/5/5 | Al | 4,000 | 2.58 | 1.5 | 9 | 1.5 | 25 |
| Example 30 | CAM-41 | 90/5/5 | Al | 4,000 | 5.02 | 1.5 | 9 | 1.5 | 25 |
| Example 31 | CAM-42 | 90/5/5 | Al | 4,000 | 6.51 | 1.5 | 9 | 1.5 | 25 |
| Example 32 | CAM-43 | 90/5/5 | Al | 12,00 0 | 1.42 | 1.5 | 9 | 1.5 | 25 |
| Example 33 | CAM-44 | 90/5/5 | Al | 12,00 0 | 1.53 | 1.5 | 9 | 1.5 | 25 |
| Example 34 | CAM-45 | 90/5/5 | Al | 12,00 0 | 2.58 | 1.5 | 9 | 1.5 | 25 |
| Example 35 | CAM-46 | 90/5/5 | Al | 12,00 0 | 5.02 | 1.5 | 9 | 1.5 | 25 |
| Example 36 | CAM-47 | 90/5/5 | Al | 12,00 0 | 6.51 | 1.5 | 9 | 1.5 | 25 |
| Example 37 | CAM-48 | 90/5/5 | Al | 15,00 0 | 1.42 | 1.5 | 9 | 1.5 | 25 |
| Example 38 | CAM-49 | 90/5/5 | Al | 15,00 0 | 1.53 | 1.5 | 9 | 1.5 | 25 |
| Example 39 | CAM-50 | 90/5/5 | Al | 15,00 0 | 2.58 | 1.5 | 9 | 1.5 | 25 |
| Example 40 | CAM-51 | 90/5/5 | Al | 15,00 0 | 5.02 | 1.5 | 9 | 1.5 | 25 |
| Example 41 | CAM-52 | 90/5/5 | Al | 15,00 0 | 6.51 | 1.5 | 9 | 1.5 | 25 |
| Comparat ive Example 8 | CAM-15 | 90/5/5 | - | - | 1.42 | 1.5 | 9 | 1.5 | 25 |
| Comparat ive Example 9 | CAM-16 | 90/5/5 | - | - | 1.53 | 1.5 | 9 | 1.5 | 25 |
| Comparat ive Example 10 | CAM-17 | 90/5/5 | - | - | 5.02 | 1.5 | 9 | 1.5 | 25 |
| Comparat ive Example 11 | CAM-18 | 90/5/5 | - | - | 6.51 | 1.5 | 9 | 1.5 | 25 |

**[TABLE 4]**

| | Room-temperature lifespan characteristics (%) | Output characteristics (W/kg) | Penetration characteristics |
|---|---|---|---|
| Example 8 | 81.4 | 2,467 | Ignition |
| Example 9 | 83.5 | 2,465 | Ignition |
| Example 10 | 91.5 | 2,457 | Ignition |
| Example 11 | 91.9 | 2,452 | Ignition |
| Example 12 | 92.1 | 2,359 | Ignition |
| Example 13 | 81.6 | 2,710 | No ignition |
| Example 14 | 83.9 | 2,707 | No ignition |
| Example 15 | 92.1 | 2,698 | No ignition |
| Example 16 | 92.6 | 2,693 | No ignition |
| Example 17 | 93.3 | 2,536 | No ignition |
| Example 18 | 81.8 | 2,879 | No ignition |
| Example 19 | 84.0 | 2,874 | No ignition |
| Example 20 | 92.2 | 2,864 | No ignition |
| Example 21 | 92.9 | 2,859 | No ignition |
| Example 22 | 94.0 | 2,735 | No ignition |
| Example 23 | 82.1 | 2,909 | No ignition |
| Example 24 | 86.4 | 2,904 | No ignition |
| Example 25 | 95.9 | 2,889 | No ignition |
| Example 26 | 96.5 | 2,763 | No ignition |
| Example 27 | 82.2 | 2,928 | No ignition |
| Example 28 | 87.4 | 2,927 | No ignition |
| Example 29 | 95.9 | 2,918 | No ignition |
| Example 30 | 96.8 | 2,914 | No ignition |
| Example 31 | 97.4 | 2,801 | No ignition |
| Example 32 | 82.4 | 2,636 | No ignition |
| Example 33 | 87.9 | 2,633 | No ignition |
| Example 34 | 96.5 | 2,624 | No ignition |
| Example 35 | 97.6 | 2,623 | No ignition |
| Example 36 | 97.7 | 2,480 | No ignition |
| Example 37 | 82.4 | 2,539 | No ignition |
| Example 38 | 88.0 | 2,536 | No ignition |
| Example 39 | 96.3 | 2,526 | No ignition |
| Example 40 | 97.7 | 2,524 | No ignition |
| Example 41 | 97.9 | 2,362 | No ignition |
| Comparative Example 8 | 81.3 | 2,465 | Ignition |
| Comparative Example 9 | 83.0 | 2,462 | Ignition |
| Comparative Example 10 | 91.6 | 2,450 | Ignition |
| Comparative Example 11 | 91.8 | 2,330 | Ignition |

Referring to Tables 3 and 4, in Examples 8 to 41, which included a doping element in a content of 100 ppm to 15,000 ppm and had an aspect ratio of 1.4 to 7.0, the room-temperature lifespan characteristics were 81.4% or more, and the output characteristics were 2,359 W/kg or more.

In Examples 13 to 41, which included a doping element in a content of 300 ppm or more and had an aspect ratio of 1.4 to 7.0, no ignition occurred even when the secondary battery was penetrated by a nail.

FIGS. 3 and 4 are images measured by observing cross-sections of arbitrary cathode active material particles among the cathode active material particles according to Example 18, respectively, using a scanning electron microscope. Referring to FIGS. 3 and 4, it can be seen that, when LiNi_{0.9}Co_{0.05}Mn_{0.05}O₂ having an aspect ratio of 1.42 and doped with Al in a content of 2,000 ppm was used as primary particles, the primary particles are stably aggregated to form secondary particles.

FIGS. 5 and 6 are images measured by observing cross-sections of arbitrary cathode active material particles among the cathode active material particles according to Example 20, respectively, using the scanning electron microscope. Referring to FIGS. 5 and 6, it can be seen that, when LiNi_{0.9}Co_{0.05}Mn_{0.05}O₂ having an aspect ratio of 2.58 and doped with Al in a content of 2,000 ppm was used as primary particles, the primary particles are stably aggregated to form secondary particles.

FIGS. 7 and 8 are images measured by observing cross-sections of arbitrary cathode active material particles among the cathode active material particles according to Example 22, respectively, using the scanning electron microscope. Referring to FIGS. 7 and 8, it can be seen that, when LiNi_{0.9}Co_{0.05}Mn_{0.05}O₂ having an aspect ratio of 6.51 and doped with Al in a content of 2,000 ppm was used as primary particles, the primary particles are stably aggregated to form secondary particles.

In Examples 25, 29, 30, 34 and 35, in which the aspect ratio was 2.5 to 5.5 and the content of the doping element was 2,500 ppm to 12,000 ppm, the room-temperature lifespan characteristics and output characteristics were relatively improved compared to Example 8.

In Comparative Examples 8 to 11, which did not include the doping element, the room-temperature lifespan characteristics and output characteristicswere deteriorated compared to the examples in which other conditions were maintained the same.

### Examples 42 to 85

Lithium secondary batteries were manufactured in the same manner as in Comparative Example 1, except that the composition of the cathode active material, the type and content of the doping element were modified as shown in Table 5 below.

The evaluation results are shown in Table 6 below.

**[TABLE 5]**

| | Abbre viatio n for catho de active mater ial | Ni/Co/ Mn (mol ratio) | Doping element | Doping amount (ppm) | Asp ect ratio | Separation membrane | | | |
|---|---|---|---|---|---|---|---|---|---|
| | | | | | | Thick ness of catho de facing ceram ic coatin g layer (µm) | Subst rate film thickn ess (µm) | Thick ness of anode facing ceram ic coatin g layer (µm) | Cera mic coatin g layer thickn ess/Se parati on memb rane thickn ess (%) |
| Example 42 | CAM -53 | 90/5/5 | Ti | 2,500 | 2.58 | 1.5 | 9 | 1.5 | 25 |
| Example 43 | CAM -54 | 90/5/5 | Ti | 4,000 | 2.58 | 1.5 | 9 | 1.5 | 25 |
| Example 44 | CAM -55 | 90/5/5 | Zr | 2,500 | 2.58 | 1.5 | 9 | 1.5 | 25 |
| Example 45 | CAM -56 | 90/5/5 | Zr | 4,000 | 2.58 | 1.5 | 9 | 1.5 | 25 |
| Example 46 | CAM -57 | 90/5/5 | Ba | 2,500 | 2.58 | 1.5 | 9 | 1.5 | 25 |
| Example 47 | CAM -58 | 90/5/5 | Ba | 4,000 | 2.58 | 1.5 | 9 | 1.5 | 25 |
| Example 48 | CAM -59 | 90/5/5 | Sr | 2,500 | 2.58 | 1.5 | 9 | 1.5 | 25 |
| Example 49 | CAM -60 | 90/5/5 | Sr | 4,000 | 2.58 | 1.5 | 9 | 1.5 | 25 |
| Example 50 | CAM -61 | 90/5/5 | W | 2,500 | 2.58 | 1.5 | 9 | 1.5 | 25 |
| Example 51 | CAM -62 | 90/5/5 | W | 4,000 | 2.58 | 1.5 | 9 | 1.5 | 25 |
| Example 52 | CAM -63 | 90/5/5 | Nb | 2,500 | 2.58 | 1.5 | 9 | 1.5 | 25 |
| Example 53 | CAM -64 | 90/5/5 | Nb | 4,000 | 2.58 | 1.5 | 9 | 1.5 | 25 |
| Example 54 | CAM -65 | 90/5/5 | Y | 2,500 | 2.58 | 1.5 | 9 | 1.5 | 25 |
| Example 55 | CAM -66 | 90/5/5 | Y | 4,000 | 2.58 | 1.5 | 9 | 1.5 | 25 |
| Example 56 | CAM -67 | 90/5/5 | Mg | 2,500 | 2.58 | 1.5 | 9 | 1.5 | 25 |
| Example 57 | CAM -68 | 90/5/5 | Mg | 4,000 | 2.58 | 1.5 | 9 | 1.5 | 25 |
| Example 58 | CAM -69 | 90/5/5 | V | 2,500 | 2.58 | 1.5 | 9 | 1.5 | 25 |
| Example 59 | CAM -70 | 90/5/5 | V | 4,000 | 2.58 | 1.5 | 9 | 1.5 | 25 |
| Example 60 | CAM -71 | 90/5/5 | Ta | 2,500 | 2.58 | 1.5 | 9 | 1.5 | 25 |
| Example 61 | CAM -72 | 90/5/5 | Ta | 4,000 | 2.58 | 1.5 | 9 | 1.5 | 25 |
| Example 62 | CAM -73 | 90/5/5 | Mo | 2,500 | 2.58 | 1.5 | 9 | 1.5 | 25 |
| Example 63 | CAM -74 | 90/5/5 | Mo | 4,000 | 2.58 | 1.5 | 9 | 1.5 | 25 |
| Example 64 | CAM -75 | 90/5/5 | La | 2,500 | 2.58 | 1.5 | 9 | 1.5 | 25 |
| Example 65 | CAM -76 | 90/5/5 | La | 4,000 | 2.58 | 1.5 | 9 | 1.5 | 25 |
| Example 66 | CAM -77 | 90/5/5 | B | 2,500 | 2.58 | 1.5 | 9 | 1.5 | 25 |
| Example 67 | CAM -78 | 90/5/5 | B | 4,000 | 2.58 | 1.5 | 9 | 1.5 | 25 |
| Example 68 | CAM -79 | 90/5/5 | Al/Y | 1,250/1,250 | 2.58 | 1.5 | 9 | 1.5 | 25 |
| Example 69 | CAM -80 | 90/5/5 | Al/Y | 2,000/2,000 | 2.58 | 1.5 | 9 | 1.5 | 25 |
| Example 70 | CAM -81 | 90/5/5 | Zr/Mo | 1,250/1,250 | 2.58 | 1.5 | 9 | 1.5 | 25 |
| Example 71 | CAM -82 | 90/5/5 | Zr/Mo | 2,000/2,000 | 2.58 | 1.5 | 9 | 1.5 | 25 |
| Example 72 | CAM -83 | 90/5/5 | Sr/W | 1,250/1,250 | 2.58 | 1.5 | 9 | 1.5 | 25 |
| Example 73 | CAM -84 | 90/5/5 | Sr/W | 2,000/2,000 | 2.58 | 1.5 | 9 | 1.5 | 25 |
| Example 74 | CAM -85 | 90/5/5 | Nb/Ti | 1,250/1,250 | 2.58 | 1.5 | 9 | 1.5 | 25 |
| Example 75 | CAM -86 | 90/5/5 | Nb/Ti | 2,000/2,000 | 2.58 | 1.5 | 9 | 1.5 | 25 |
| Example 76 | CAM -87 | 90/5/5 | Mg/B | 1,250/1,250 | 2.58 | 1.5 | 9 | 1.5 | 25 |
| Example 77 | CAM -88 | 90/5/5 | Mg/B | 2,000/2,000 | 2.58 | 1.5 | 9 | 1.5 | 25 |
| Example 78 | CAM -89 | 90/5/5 | Ta/Ba | 1,250/1,250 | 2.58 | 1.5 | 9 | 1.5 | 25 |
| Example 79 | CAM -90 | 90/5/5 | Ta/Ba | 2,000/2,000 | 2.58 | 1.5 | 9 | 1.5 | 25 |
| Example 80 | CAM -91 | 90/5/5 | La/V | 1,250/1,250 | 2.58 | 1.5 | 9 | 1.5 | 25 |
| Example 81 | CAM -92 | 90/5/5 | La/V | 2,000/2,000 | 2.58 | 1.5 | 9 | 1.5 | 25 |
| Example 82 | CAM -93 | 90/5/5 | Ti/Sr/Y | 900/800/800 | 2.58 | 1.5 | 9 | 1.5 | 25 |
| Example 83 | CAM -94 | 90/5/5 | Ti/Sr/Y | 1,400/1,400/1,200 | 2.58 | 1.5 | 9 | 1.5 | 25 |
| Example 84 | CAM -95 | 90/5/5 | Al/Zr/ W | 900/900/800 | 2.58 | 1.5 | 9 | 1.5 | 25 |
| Example 85 | CAM -96 | 90/5/5 | Al/Zr/ W | 1,400/1,400/1,200 | 2.58 | 1.5 | 9 | 1.5 | 25 |

**[TABLE 6]**

| | Room-temperature lifespan characteristics (%) | Output characteristics (W/kg) | Penetration characteristics |
|---|---|---|---|
| Example 42 | 94.8 | 2,894 | No ignition |
| Example 43 | 96.1 | 2,967 | No ignition |
| Example 44 | 95.0 | 2,869 | No ignition |
| Example 45 | 96.2 | 2,918 | No ignition |
| Example 46 | 94.8 | 2,845 | No ignition |
| Example 47 | 95.8 | 2,894 | No ignition |
| Example 48 | 94.9 | 2,845 | No ignition |
| Example 49 | 95.9 | 2,918 | No ignition |
| Example 50 | 95.3 | 2,869 | No ignition |
| Example 51 | 95.8 | 2,943 | No ignition |
| Example 52 | 94.6 | 2,820 | No ignition |
| Example 53 | 95.5 | 2,894 | No ignition |
| Example 54 | 94.8 | 2,845 | No ignition |
| Example 55 | 95.8 | 2,918 | No ignition |
| Example 56 | 94.4 | 2,820 | No ignition |
| Example 57 | 95.1 | 2,869 | No ignition |
| Example 58 | 95.3 | 2,894 | No ignition |
| Example 59 | 95.8 | 2,943 | No ignition |
| Example 60 | 94.5 | 2,845 | No ignition |
| Example 61 | 95.2 | 2,869 | No ignition |
| Example 62 | 94.7 | 2,845 | No ignition |
| Example 63 | 95.5 | 2,894 | No ignition |
| Example 64 | 95.1 | 2,869 | No ignition |
| Example 65 | 95.8 | 2,918 | No ignition |
| Example 66 | 94.7 | 2,894 | No ignition |
| Example 67 | 95.3 | 2,943 | No ignition |
| Example 68 | 96.6 | 3,065 | No ignition |
| Example 69 | 97.8 | 3,139 | No ignition |
| Example 70 | 96.8 | 3,090 | No ignition |
| Example 71 | 97.8 | 3,114 | No ignition |
| Example 72 | 97.8 | 3,114 | No ignition |
| Example 73 | 98.6 | 3,163 | No ignition |
| Example 74 | 97.2 | 3,090 | No ignition |
| Example 75 | 98.1 | 3,212 | No ignition |
| Example 76 | 97.5 | 3,139 | No ignition |
| Example 77 | 98.2 | 3,237 | No ignition |
| Example 78 | 96.9 | 3,090 | No ignition |
| Example 79 | 98.4 | 3,139 | No ignition |
| Example 80 | 96.8 | 3,114 | No ignition |
| Example 81 | 98.1 | 3,163 | No ignition |
| Example 82 | 96.6 | 3,139 | No ignition |
| Example 83 | 98.6 | 3,237 | No ignition |
| Example 84 | 96.9 | 3,163 | No ignition |
| Example 85 | 98.5 | 3,311 | No ignition |

Referring to Tables 5 and 6, in Examples 42 to 85 in which at least one of Al, Ti, Zr, Ba, Sr, W, Nb, Y, Mg, V, Ta, Mo, La and B was used as a doping element and the content of the doping element was 2,500 ppm to 4,000 ppm, the room-temperature lifespan characteristics were 94.4% or more, and the output characteristics were 2,820 W/kg or more. In addition, no ignition occurred even when the secondary battery was penetrated by a nail.

In Examples 42 to 45, 50, 51, 58, 59, and 64 to 67, in which at least one of Ti, Zr, W, V, La and B was used as a doping element, the room-temperature lifespan characteristics and output characteristics were relatively improved compared to the other examples.

In Examples 68 to 85, in which two or more doping elements were used, the room-temperature lifespan characteristics and output characteristics were relatively improved compared to the other examples.

### Examples 86 to 96 and Comparative Examples 12 to 34

Lithium secondary batteries were manufactured in the same manner as in Comparative Example 1, except that the composition of the cathode active material, the type and content of the doping element, and the thickness of the ceramic coating layer of the separation membrane and the substrate film were modified as shown in Table 7 below.

The evaluation results are shown in Table 8 below.

**[TABLE 7]**

| | Abbrevia tion for cathode active material | Ni/Co/M n (mol ratio) | Doping element | Dopin g amou nt (ppm) | Aspec t ratio | Separation membrane | | | |
|---|---|---|---|---|---|---|---|---|---|
| | | | | | | Thickn ess of cathod e facing cerami c coating layer (µm) | Substra te film thickne ss (µm) | Thickn ess of anode facing cerami c coating layer (µm) | Cerami c coating layer thickne ss/Sepa ration membr ane thickne ss (%) |
| Example 86 | CAM-12 | 90/5/5 | Al | 2,500 | 2.58 | 3 | 9 | 3 | 40 |
| Example 87 | CAM-12 | 90/5/5 | Al | 2,500 | 2.58 | 2.5 | 10 | 2.5 | 33 |
| Example 88 | CAM-12 | 90/5/5 | Al | 2,500 | 2.58 | 2 | 11 | 2 | 27 |
| Example 89 | CAM-12 | 90/5/5 | Al | 2,500 | 2.58 | 1.5 | 12 | 1.5 | 20 |
| Example 90 | CAM-12 | 90/5/5 | Al | 2,500 | 2.58 | 1 | 13 | 1 | 13 |
| Example 91 | CAM-12 | 90/5/5 | Al | 2,500 | 2.58 | 2.5 | 7 | 2.5 | 42 |
| Example 92 | CAM-12 | 90/5/5 | Al | 2,500 | 2.58 | 2 | 8 | 2 | 33 |
| Example 93 | CAM-12 | 90/5/5 | Al | 2,500 | 2.58 | 1 | 10 | 1 | 17 |
| Example 94 | CAM-12 | 90/5/5 | Al | 2,500 | 2.58 | 2 | 5 | 2 | 44 |
| Example 95 | CAM-12 | 90/5/5 | Al | 2,500 | 2.58 | 1.5 | 6 | 1.5 | 33 |
| Example 96 | CAM-12 | 90/5/5 | Al | 2,500 | 2.58 | 1 | 7 | 1 | 22 |
| Comparat ive Example 12 | CAM-5 | 90/5/5 | - | - | 2.58 | 0 | 15 | 0 | 0 |
| Comparat ive Example 13 | CAM-5 | 90/5/5 | - | - | 2.58 | 3 | 9 | 3 | 40 |
| Comparat ive Example 14 | CAM-5 | 90/5/5 | - | - | 2.58 | 2.5 | 10 | 2.5 | 33 |
| Comparat ive Example 15 | CAM-5 | 90/5/5 | - | - | 2.58 | 2 | 11 | 2 | 27 |
| Comparat ive Example 16 | CAM-5 | 90/5/5 | - | - | 2.58 | 1.5 | 12 | 1.5 | 20 |
| Comparat ive Example 17 | CAM-5 | 90/5/5 | - | - | 2.58 | 1 | 13 | 1 | 13 |
| Comparat ive Example 18 | CAM-5 | 90/5/5 | - | - | 2.58 | 0.5 | 14 | 0.5 | 7 |
| Comparat ive Example 19 | CAM-5 | 90/5/5 | - | - | 2.58 | 0 | 12 | 0 | 0 |
| Comparat ive Example 20 | CAM-5 | 90/5/5 | - | - | 2.58 | 2.5 | 7 | 2.5 | 42 |
| Comparat ive Example 21 | CAM-5 | 90/5/5 | - | - | 2.58 | 2.0 | 8 | 2.0 | 33 |
| Comparat ive Example 22 | CAM-5 | 90/5/5 | - | - | 2.58 | 1 | 10 | 1 | 17 |
| Comparat ive Example 23 | CAM-5 | 90/5/5 | - | - | 2.58 | 0.5 | 11 | 0.5 | 8 |
| Comparat ive Example 24 | CAM-5 | 90/5/5 | - | - | 2.58 | 0 | 9 | 0 | 0 |
| Comparat ive Example 25 | CAM-5 | 90/5/5 | - | - | 2.58 | 2 | 5 | 2 | 44 |
| Comparat ive Example 26 | CAM-5 | 90/5/5 | - | - | 2.58 | 1.5 | 6 | 1.5 | 33 |
| Comparat ive Example 27 | CAM-5 | 90/5/5 | - | - | 2.58 | 1 | 7 | 1 | 22 |
| Comparat ive Example 28 | CAM-5 | 90/5/5 | - | - | 2.58 | 0.5 | 8 | 0.5 | 11 |
| Comparat ive Example 29 | CAM-12 | 90/5/5 | Al | 2,500 | 2.58 | 0 | 15 | 0 | 0 |
| Comparat ive Example 30 | CAM-12 | 90/5/5 | Al | 2,500 | 2.58 | 0.5 | 14 | 0.5 | 7 |
| Comparat ive Example 31 | CAM-12 | 90/5/5 | Al | 2,500 | 2.58 | 0 | 12 | 0 | 0 |
| Comparat ive Example 32 | CAM-12 | 90/5/5 | Al | 2,500 | 2.58 | 0.5 | 11 | 0.5 | 8 |
| Comparat ive Example 33 | CAM-12 | 90/5/5 | Al | 2,500 | 2.58 | 0 | 9 | 0 | 0 |
| Comparat ive Example 34 | CAM-12 | 90/5/5 | Al | 2,500 | 2.58 | 0.5 | 8 | 0.5 | 11 |

**[TABLE 8]**

| | Room-temperature lifespan characteristics (%) | Output characteristics (W/kg) | Penetration characteristics |
|---|---|---|---|
| Example 86 | 97.2 | 2,806 | No ignition |
| Example 87 | 96.9 | 2,834 | No ignition |
| Example 88 | 96.5 | 2,840 | No ignition |
| Example 89 | 96.0 | 2,846 | No ignition |
| Example 90 | 95.5 | 2,851 | No ignition |
| Example 91 | 96.0 | 2,884 | No ignition |
| Example 92 | 95.6 | 2,889 | No ignition |
| Example 93 | 94.6 | 2,900 | No ignition |
| Example 94 | 94.5 | 2,933 | No ignition |
| Example 95 | 94.2 | 2,939 | No ignition |
| Example 96 | 93.5 | 2,946 | No ignition |
| Comparative Example 12 | 90.9 | 2,565 | Ignition |
| Comparative Example 13 | 93.6 | 2,260 | No ignition |
| Comparative Example 14 | 93.3 | 2,314 | Ignition |
| Comparative Example 15 | 93.0 | 2,355 | Ignition |
| Comparative Example 16 | 92.4 | 2,414 | Ignition |
| Comparative Example 17 | 91.9 | 2,457 | Ignition |
| Comparative Example 18 | 91.3 | 2,516 | Ignition |
| Comparative Example 19 | 89.9 | 2,606 | Ignition |
| Comparative Example 20 | 92.4 | 2,348 | No ignition |
| Comparative Example 21 | 91.8 | 2,390 | Ignition |
| Comparative Example 22 | 91.0 | 2,494 | Ignition |
| Comparative Example 23 | 90.5 | 2,559 | Ignition |
| Comparative Example 24 | 88.9 | 2,647 | Ignition |
| Comparative Example 25 | 91.0 | 2,074 | No ignition |
| Comparative Example 26 | 90.5 | 2,175 | Ignition |
| Comparative Example 27 | 90.0 | 2,256 | Ignition |
| Comparative Example 28 | 89.3 | 2,365 | Ignition |
| Comparative Example 29 | 92.7 | 2,860 | Ignition |
| Comparative Example 30 | 95.0 | 2,857 | Ignition |
| Comparative Example 31 | 91.8 | 2,909 | Ignition |
| Comparative Example 32 | 93.9 | 2,906 | Ignition |
| Comparative Example 33 | 90.9 | 2,954 | Ignition |
| Comparative Example 34 | 94.1 | 2,951 | Ignition |

Referring to Tables 7 and 8, in Examples 86 to 96, in which a doping element was included and the ratio of the thickness of the ceramic coating layer to the thickness of the separation membrane was 0.13 to 0.44, the room-temperature lifespan characteristics were 93.5% or more and the output characteristics were 2,806 W/kg or more. In addition, no ignition occurred even when the secondary battery was penetrated by a nail.

In Examples 87 to 89, 92, 93, 95, and 96, in which the ratio of the thickness of the ceramic coating layer to the thickness of the separation membrane was 0.17 to 0.33, the room-temperature lifespan characteristics and output characteristics were relatively increased compared to the other examples.

In Comparative Examples 12 to 28, which did not include the doping element, the room-temperature lifespan characteristics and output characteristics were relatively deteriorated compared to the examples in which other conditions were maintained the same.

In Comparative Examples 12, 14 to 19, 21 to 24, and 26 to 28, in which no doping element was included and the ratio of the thickness of the ceramic coating layer to the thickness of the separation membrane was 0.4 or less, ignition occurred after the secondary battery was penetrated by the nail.

In Comparative Examples 29 to 34, in which a doping element was included, but the ratio of the thickness of the ceramic coating layer to the thickness of the separation membrane deviated from the range of 0.13 to 0.44, ignition occurred after the secondary battery was penetrated by the nail.

### Examples 97 and 98

Lithium secondary battery were manufactured in the same manner as in Comparative Example 1, except that the composition of the cathode active material, the type and content of the doping element, and the position and thickness of the ceramic coating layer were modified as shown in Table 9 below.

The evaluation results are shown in Table 10 below.

**[TABLE 9]**

| Abbrevia | Abbrevia tion for cathode active material | Ni/Co/M n (mol ratio) | Doping element | Dopin g amou nt (ppm) | Aspec t ratio | Separation membrane | | | |
|---|---|---|---|---|---|---|---|---|---|
| | | | | | | Thickn ess of cathod e facing cerami c coating layer (µm) | Substra te film thickne ss (µm) | Thickn ess of anode facing cerami c coating layer (µm) | Cerami c coating layer thickne ss/Sepa ration membr ane thickne ss (%) |
| Example 97 | CAM-12 | 90/5/5 | Al | 2,500 | 2.58 | 3 | 9 | 0 | 25 |
| Example 98 | CAM-12 | 90/5/5 | Al | 2,500 | 2.58 | 0 | 9 | 3 | 25 |

**[TABLE 10]**

| | Room-temperature lifespan characteristics (%) | Output characteristics (W/kg) | Penetration characteristics |
|---|---|---|---|
| Example 97 | 94.8 | 2,893 | No ignition |
| Example 98 | 94.6 | 2,895 | No ignition |

Referring to Tables 9 and 10, in the examples, in which a doping element was included and a ceramic coating layer was formed only on one surface of the separation membrane, the room-temperature lifespan characteristics were 94.6% or more and the output characteristics were 2,893 W/kg or more. In addition, no ignition occurred after the secondary battery was penetrated by the nail.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
145: Substrate film
147: Ceramic coating layer
150: Electrode assembly
160: Case

## Claims

1. A lithium secondary battery comprising:
a cathode which comprises a lithium metal oxide having a secondary particle form in which a plurality of primary particles are aggregated, and doped with a doping element;
an anode disposed to face the cathode; and
a separation membrane interposed between the cathode and the anode, and comprising a substrate film and a ceramic coating layer formed on at least one surface of the substrate film,
wherein the primary particles have an aspect ratio of 1.4 to 7.0, and
a ratio of a thickness of the ceramic coating layer to a total thickness of the separation membrane is 0.13 to 0.44.

2. The lithium secondary battery according to claim 1, wherein the aspect ratio is 2.5 to 5.5.

3. The lithium secondary battery according to claim 1 or 2, wherein the lithium metal oxide comprises nickel, and
a molar fraction of nickel relative to a total number of moles of all elements excluding lithium and oxygen in the lithium metal oxide is 0.5 or more and less than 1.

4. The lithium secondary battery according to claim 3, wherein the molar fraction of nickel relative to the total number of moles of all elements excluding lithium and oxygen in the lithium metal oxide is 0.6 to 0.94.

5. The lithium secondary battery according to any one of claims 1 to 4, wherein the doping element comprises at least one selected from the group consisting of Al, Ti, Zr, Ba, Sr, W, Nb, Y, Mg, V, Ta, Mo, La and B.

6. The lithium secondary battery according to any one of claims 1 to 5, wherein the doping element comprises at least one selected from the group consisting of Al, Ti, Zr, W, V, La and B.

7. The lithium secondary battery according to any one of claims 1 to 6, wherein the doping element comprises two or more different doping elements.

8. The lithium secondary battery according to any one of claims 1 to 7, wherein a content of the doping element is 300 ppm to 15,000 ppm based on a total weight of the lithium metal oxide.

9. The lithium secondary battery according to any one of claims 1 to 8, wherein the content of the doping element is 2,500 ppm to 12,000 ppm based on the total weight of the lithium metal oxide.

10. The lithium secondary battery according to any one of claims 1 to 9, wherein the ratio of the thickness of the ceramic coating layer to the total thickness of the separation membrane is 0.17 to 0.33.

11. The lithium secondary battery according to any one of claims 1 to 10, wherein the separation membrane has a total thickness of 9 µm to 18 µm.

12. The lithium secondary battery according to claim 11, wherein the ceramic coating layer has a total thickness of 2 µm to 6 µm.

13. The lithium secondary battery according to any one of claims 1 to 12, wherein the ceramic coating layer comprises a ceramic material and a binder used in the coating layer of the separation membrane.

14. The lithium secondary battery according to claim 13, wherein the ceramic material comprises at least one selected from the group consisting of alumina, titanium oxide, barium titanate, magnesium oxide, zirconia, zinc oxide, boehmite, aluminum hydroxide, magnesium hydroxide and silica.
